# EUROPÄISCHE PATENTSCHRIFT

(11) **EP 0 896 654 B1**
(45) Veröffentlichungstag und Bekanntmachung des Hinweises auf die Patenterteilung: **24.10.2001**
(21) Anmeldenummer: 98903215.6
(22) Anmeldetag: 04.02.1998
(51) Int. Cl.: F16L 33/01, F16L 33/18, F16L 33/00

(54) **PRESSVERBINDUNG**
COMPRESSION JOINT
RACCORD SERRE A LA PRESSE

(30) Priorität: 25.02.1997 DE 19707827
(43) Veröffentlichungstag der Anmeldung: 17.02.1999
(73) Patentinhaber: GEBERIT TECHNIK AG, 8645 Jona (CH)
(72) Erfinder: WEBER, Peter, CH-8645 Jona (CH)
(74) Vertreter: Zipse + Habersack
(86) Internationale Anmeldenummer: IB9800226
(87) Internationale Veröffentlichungsnummer: WO9838449

(56) Entgegenhaltungen:
- EP-A- 0 152 723
- CH-A- 682 942
- GB-A- 640 420
- GB-A- 762 072

## Beschreibung

Die vorliegende Erfindung betrifft ein Verbindungsteil für eine Preßverbindung und eine damit hergestellte Preßverbindung.

Verbindungsteile aus Kunststoff zur Herstellung einer Preßverbindung sind beispielsweise aus der CH 682 942 A5 bekannt. Das dort gezeigte Verbindungsteil besteht aus Kunststoff und enthält Umfangsbereiche, auf die ein Rohr, insbesondere ein Verbundrohr aufgepreßt ist. Bei dem bekannten Verbindungsteil ist innerhalb des Umfangsbereichs eine Nut vorgesehen, in der ein Sicherungsring aus Metall gehalten ist, der nach außen hin scharfe Kanten aufweist. Dieser Ring gewährleistet auch bei hohen axialen Zugkräften eine sichere kraft- und formschlüssige Verbindung zwischen dem Verbundrohr und dem Verbindungsteil. Da der Grundkörper des Verbindungsteils aus Kunststoff hergestellt ist, treten keine Korrosionsprobleme auf, die z.B. bei Verbindungsteilen aus Messing bekannt sind. Als geeignete Kunststoffe werden Polyolefin und vernetztes Polyethylen angegeben. Dieses Verbindungsteil funktioniert relativ gut, ist jedoch in seinem Dauerverhalten insbesondere bei Auftreten sehr starker Temperaturwechsel nicht vollkommen zufriedenstellend. Außerdem macht der Metall- Sicherungsring die Herstellung aufwendig.

Es ist daher Aufgabe der vorliegenden Erfindung, ein Verbindungsteil für eine Preßverbindung und eine Preßverbindung zu schaffen, die bei kostengünstiger Herstellung für hohe Drücke geeignet sind und auch bei stärkeren Temperaturwechseln eine hohe Lebensdauer und Zuverlässigkeit aufweisen.

Diese Aufgabe wird durch ein Verbindungsteil gemäß Anspruch 1 und eine Preßverbindung gemäß Anspruch 8 gelöst.

Es wurde überraschenderweise festgestellt, daß der Kunststoff Polyvinylidenfluorid (PVDF), der in R. Schenider und Th. Köhler "Ein Beitrag zur Verwendung von Kunststoffrohren, in der Versorgungstechnik" gwf Wasser. Abwasser 134 (1993) Nr. 1, Seiten 25-33 als sehr geeignet für bestimmte Spezialanwendungen beschrieben, aber für derartige Leitungsteile und Fittings bisher ungebräuchlich ist, aufgrund seiner sehr guten Eigenschaften wie Druckbeständigkeit, Langzeitstabilität und Temperaturwechselbeständigkeit sehr geeignet ist für eine Pressverbindung, wobei sich wegen der hohen Oberflächenqualität eine ausreichende axiale Sicherung auch ohne zusätzlichen Metall- Sicherungsring erzielen läßt.

Das aus PVDF hergestellte Verbindungsteil erfüllt alle hygienischen Anforderungen, die im Rahmen der Trinkwasserverordnung gestellt werden. Korrosionsprobleme, insbesondere im Zusammenwirken mit anderen Metallen, treten nicht auf.

Das Verbindungsrohr oder die Verbindungsrohre werden auf das Verbindungsteil aufgeschoben, welches im Umfangsbereich mehrere umlaufende Rippen aufweist. Weiterhin ist ein umlaufender Dichtungsring vorgesehen, der als zusätzliche Abdichtung zwischen dem Verbindungsteil und dem Verbundrohr dient.

Bevorzugt kann die axiale Sicherung des Verbundrohrs auch durch sägezahnförmige Rippen am Verbundteil vorgesehen sein. Die Rippen sind dann vorzugsweise in zwei axialen Bereichen in einer einheitlichen Orientierung angeordnet, wobei die Orientierung in den beiden axialen Bereichen gleich (nur Zugsicherung) oder entgegengesetzt (Druck- und Zugsicherung) sein kann. Die sägezahnförmigen Rippen mit der scharfen Außenkante sind jedoch vorzugsweise in einer Richtung derart ausgerichtet, daß das Verbundrohr gegen Zug an dem Verbindungsteil gesichert ist Gegen Druck kann es durch eine radiale Anschlagfläche gesichert sein. Dichtungsringe können sich zwischen gerippten Bereichen oder auch am Flanschende des Verbindungsteils befinden.

Zusätzlich zu einer Verrippung des Umfangsbereichs kann eine stufenförmige Ausbildung des Umfangsbereichs vorgesehen sein. Durch die Stufen wird zum einen eine axiale Sicherung und zum anderen eine größere Dichtheit erzielt. Sie bewirkt beim Verpressen einen intensiveren Formeingriff des Verbundrohres mit dem Verbindungsteil.

Die Erfindung wird nachfolgend beispielsweise anhand eines Ausführungsbeispiels in Verbindung mit der schematischen Zeichnung beschrieben. In dieser zeigen:
- Fig. 1: eine teilgeschnittene Seitenansicht einer Preßverbin dung mit einem Verbindungsteil, einem Verbundrohr und einer Preßzange, und
- Fig. 2: eine vergrößerte Ansicht des für die Verpressung des Verbundrohres bestimmten Umfangsbereich des Verbindungsteils aus Fig. 1.

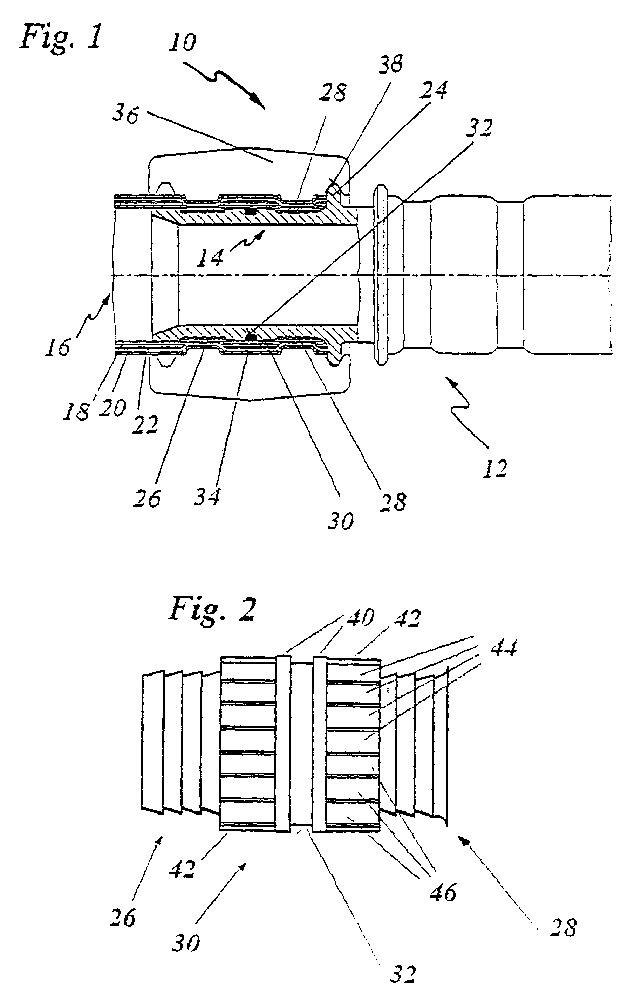

Fig. 1 zeigt eine Preßverbindung 10 mit einem rohrförmigen Verbindungsteil 12, das an zumindest einem freien Ende einen Umfangsbereich 14 aufweist, der zum Verpressen eines Verbundrohres 16 bestimmt ist. Das Verbundrohr 16 besteht in der Regel aus einer Innenlage 18 vernetztem Polyethylen, einer Zwischenlage 20 aus Aluminium und einer Außenlage 22 aus Polyethylen. Dieses Verbundrohr 16 wird auf das freie Ende des Verbindungsteils 12 aufgeschoben, bis es mit seiner Stirnseite an einem umlaufenden Vorsprung 24 des Verbindungsteils anstößt. Der zur Verpressung mit dem Verbundrohr vorgesehene Umfangsbereich 14 des Verbindungsteils 12 enthält zwei durchmesserkleinere gerippte Bereiche 26, 28, die durch einen erhabenen Bereich 30 voneinander getrennt sind. Der Umfangsbereich 14 wird später noch detaillierter in Verbindung mit Fig. 2 beschrieben. In dem erhabenen, etwas durchmesserstärkeren Bereich 30 ist eine Nut 32 zur Aufnahme einer O-Ring-Dichtung 34 vorgesehen. Das Verbundrohr wird durch eine Zange 36 auf das Verbindungsteil 12 aufgepreßt. Das Verbundrohr 12 hat die Eigenschaft, daß es nach dem Aufpressen irreversibel verformt bleibt. Daher hat die Preßzange ebenfalls profilierte Bereiche, die den profilierten Bereichen im zur Verpressung mit dem Verbundrohr 16 vorgesehenen Umfangsbereich 14 des Verbindungsteils 12 entsprechen. Zusätzlich hat die Preßzange 36 eine Nut 38, die formschlüssig mit dem Vorsprung 24 des Verbindungsteils zusammenwirkt, so daß ein genauer axialer Sitz der Preßzange 36 am Außenumfang 14 des Verbindungsteils 12 erzielt wird. Beim Verpressen schneiden sich die in Umfangsrichtung verlaufenden Rippen in den Bereichen 26, 28 in die Innenschicht 18 des Verbundrohres 16 ein und bewirken so eine Dichtigkeit als auch eine axiale Sicherung. Eine zusätzliche Dichtigkeit und axiale Sicherung werden durch den unterschiedlichen Durchmesser der gerippten Bereiche 26 und 28 einerseits und des erhabenen Bereiches 30 andererseits realisiert. Das Verbindungsteil 12 bestehend aus Polyvinylidenfluorid, ist sehr oberflächengenau, temperatur- und druckwechselbeständig und hat eine lange Lebensdauer, wodurch eine langzeitstabile Preßverbindung des Verbindungsteils 12 mit dem Verbundrohr 16 erzielt wird. Die irreversible Verformung des Verbundrohres 14 wird in erster Linie durch die Zwischenlage aus Aluminium bewirkt.

Fig. 2 zeigt eine Detailansicht des Umfangsbereichs 14 mit den beiden gerippten axialen Abschnitten 26,28 und dem dazwischen angeordneten erhabenen Bereich 30.
Der erhabene Bereich 30 enthält die Nut 32 für den Dichtungsring 34 und beidseitig der Nut 32 jeweils einen erhöhten glatten Ringbereich 40, an den sich außenseitig jeweils ein axialer Bereich 42 anschließt, der über den Umfang eine Vielzahl von ersten und zweiten Sägezahnrippen 44 und 46 aufweist. Die ersten Sägezahnrippen 44 sind in eine erste Richtung orientiert, und die zweiten Rippen 46 sind entgegengesetzt zu den ersten Rippen 44 orientiert. Diese radial angeordneten Rippen, die sich nur über einen geringen Umfangswinkel erstrecken, dienen als Drehsicherung für das Verbundrohr, wobei die entgegengesetzte Orientierung der beiden Rippen 44 und 46 eine Drehsicherung in beide Drehrichtungen bewirkt.

## Patentansprüche

1. Verbindungsteil zur Herstellung einer Pressverbindung mit wenigstens einem Rohr, insbesondere Verbundrohr (16), das durch eine irreversible Verformung oder eine Pressmanschette radial gegen das Verbindungsteil (12) festgepresst wird, mit einem rohrförmigen Grundkörper, an dessen Außenumfang wenigstens ein Umfangsbereich (14) vorgesehen ist, gegen den das Rohr (16) radial festgepresst wird, und in dem zumindest eine umlaufende Nut (32) vorgesehen ist, in der ein radial nach außen vorstehender und axial gesicherter O-Ring (34) aus einem elastischen Material aufgenommen ist, **dadurch gekennzeichnet, dass** der Grundkörper aus Polyvinylidenfluorid (PVDF) besteht und in Teilen (26,28) des Umfangsbereichs (14) umlaufende Rippen vorgesehen sind, die eine scharfe Oberkante aufweisen.

2. Verbindungsteil nach Anspruch 1, **dadurch gekennzeichnet, dass** die Rippen sägezahnförmig ausgebildet sind.

3. Verbindungsteil nach Anspruch 1 oder 2, **dadurch gekennzeichnet, dass** der O-Ring (34) in dem zur Verpressung mit dem Verbundrohr (16) vorgesehenen Umfangsbereich (14) zwischen zwei gerippten Bereichen (26,28) angeordnet ist.

4. Verbindungsteil nach einem der Ansprüche 1-3, **dadurch gekennzeichnet, dass** die Nut (32) in einem durchmessergrößeren Abschnitt (30) des zur Verpressung mit dem Verbundrohr (16) vorgeshenen Umfangsbereichs (14) angeordnet ist.

5. Verbindungsteil nach Anspruch 4, **dadurch gekennzeichnet, dass** in dem durchmessergrößeren Teil (30) des zur Verpressung mit dem Verbundrohr (16) vorgesehenen Umfangbereichs (14) axiale Rippen (44,46) zur Drehsicherung des Verbundrohres (16) auf dem Verbingungsteils (12) vorgesehen sind.

6. Verbindungsteil nach Anspruch 5, **dadurch gekennzeichnet, dass** die Rippen (44,46) sägezahnförmig ausgebildet und beidseitig der Nut (32) entgegengesetzt ausgerichtet sind.

7. Verbindungsteil nach einem der vorhergehenden Ansprüche, **dadurch gekennzeichnet, dass** es einen umlaufenden Vorsprung (24) aufweist, der einen axialen Anschlag für das Verbundrohr (16) bildet.

8. Pressverbindung, umfassend ein Verbindungsteil (12) nach einem der vorhergehenden Ansprüche und wenigstens ein daraufgeschobenens Verbundrohr (16), enthaltend
- eine Innenlage (18) vernetztes Polyethylen,
- eine Zwischenlage (20) Aluminium und
- eine Außenlage (22) Polyethylen.

## Claims

1. A coupling for producing a compression joint with at least one pipe, especially a composite pipe (16), which is compressed tight by an irreversible deformation or a compression collar radially against said coupling (12), comprising a tubular basic body on whose outer periphery there is at least one peripheral area (14) against which said pipe (16) is tightly compressed radially, in which at least one peripheral groove (32) is provided to receive an O-ring (34) of an elastic material axially secured and projecting radially to the outside, **characterized in that** said basic body is made of polyvinylidene fluoride (PVDF) and peripheral ribs having a sharp top edge are provided in said parts (26, 28) of said peripheral area (14).

2. The coupling as set forth in claim 1, **characterized in that** said ribs are configured sawtooth-shaped.

3. The coupling as set forth in claim 1 or 2, **characterized in that** said O-ring (34) is arranged in said peripheral area (14) provided for compressing with said composite pipe (16) between two ribbed areas (26, 28).

4. The coupling as set forth in any of the claims 1 to 3, **characterized in that** said groove (32) is arranged in a section (30) with a larger diameter in said peripheral area (14) provided for compressing with said composite pipe (16).

5. The coupling as set forth in claim 4, **characterized in that** in said part (30) with the larger diameter of said peripheral area (14) provided for compressing with said composite pipe (16) there are axial ribs (44, 46) for rotationally locking said composite pipe (16) on said coupling (12)

6. The coupling as set forth in claim 5, **characterized in that** said ribs (44, 46) are configured sawtooth-shaped and opposingly oriented on both sides of said groove (32).

7. The coupling as set forth in any of the preceding claims, **characterized in that** it comprises a peripheral protuberance (24) forming an axial stop for said composite pipe (16).

8. A compression joint comprising a coupling (12) as set forth in any of the preceding claims and at least one composite pipe (16) mounted thereon containing
- an inner layer (18) of crosslinked polyethylene,
- an intermediate layer (20) of aluminum and
- an outer layer (22) of polyethylene.

## Revendications

1. Pièce de jonction pour réaliser une liaison sertie entre au moins un tuyau, en particulier un tuyau de type composite (16) qui est pressé radialement sur la pièce de jonction (12) par une déformation irréversible ou une par un manchon serti, comprenant un corps de base tubulaire sur la surface extérieure duquel il est prévu au moins une zone périphérique (14)contre laquelle le tuyau (16) est pressé radialement et dans laquelle il est prévu au moins une gorge (32) circulaire dans laquelle est logé un joint torique (34) faisant saillie radialement et tenu dans la direction axiale en un matériau élastique, **caractérisée en ce que** le corps de base est fluorure de polyvinylidène (PVDF) et qu'il est prévu dans des parties (26, 28) de la zone périphérique (14) des nervures circulaires qui présentent une arête supérieure aigue.

2. Pièce de jonction selon la revendication 1, **caractérisée en ce que** les nervures sont conformées en dents de scie.

3. Pièce de jonction selon la revendication 1 ou 2, **caractérisée en ce que** le joint torique (34) est disposé dans la zone périphérique (14) prévue pour le sertissage avec le tuyau composite (16) entre deux zones nervurées (26, 28).

4. Pièce de jonction selon une des revendications 1 à 3, **caractérisée en ce que** la gorge (32) est aménagée dans une portion (30) à diamètre augmenté de la zone périphérique (14) destinée au sertissage avec le tuyau composite (16).

5. Pièce de jonction selon la revendication 4, **caractérisée en ce que** dans la portion (30) de diamètre augmenté de la zone périphérique (14) destinée au sertissage avec le tuyau composite (16) sont prévues des nervures axiales (44, 46) pour le blocage en rotation du tuyau composite (16) sur la pièce de jonction (12).

6. Pièce de jonction selon la revendication 5, **caractérisée en ce que** les nervures (44, 46) sont conformées en dents de scie et sont orientées dans des directions opposées de part et d'autre de la gorge (32).

7. Pièce de jonction selon une des revendications précédentes, **caractérisée en ce qu'**elle comporte une saillie circulaire (24) qui forme une butée axiale pour le tuyau composite (16).

8. Liaison sertie comprenant une pièce de jonction (12) selon l'une quelconque des revendications précédentes et au moins un tuyau composite (16) emmanché sur celle-ci, comportant:
- une couche intérieure (18) en polyéthylène réticulé,
- une couche intermédiaire (20) en aluminium et
- une couche extérieure (22) en polyéthylène.
